(19) **Europäisches Patentamt / European Patent Office / Office européen des brevets**

(11) **EP 3 745 088 B1**

(12) **EUROPEAN PATENT SPECIFICATION**

(45) Date of publication and mention
of the grant of the patent:
**23.04.2025 Bulletin 2025/17**

(21) Application number: **19305694.2**

(22) Date of filing: **29.05.2019**

(51) International Patent Classification (IPC):
**G01C 21/34** (2006.01)  **G01C 21/36** (2006.01)

(52) Cooperative Patent Classification (CPC):
**G01C 21/3423; G01C 21/3476; G01C 21/3644; G01C 21/3679**

(54) **SYSTEM AND METHOD FOR GENERATING ORIGIN-INDEPENDENT ACCESS MAPS**

SYSTEM UND VERFAHREN ZUR ERZEUGUNG VON URSPRUNGSUNABHÄNGIGEN ZUGRIFFSKARTEN

SYSTÈME ET PROCÉDÉ PERMETTANT DE GÉNÉRER DES CARTES D'ACCÈS INDÉPENDANTES DE L'ORIGINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.12.2020 Bulletin 2020/49**

(73) Proprietor: **Naver Corporation**
**Seongnam-si, Gyeonggi-do 13561 (KR)**

(72) Inventors:
• **WILLAMOWSKI, Jutta Katharina**
**38100 Grenoble (FR)**
• **GRASSO, Maria Antonietta**
**38000 Grenoble (FR)**
• **HOPPENOT, Yves**
**38220 Notre Dame de Mesage (FR)**

• **LANGLAIS, Michel**
**38800 Pont de Claix (FR)**

(74) Representative: **Regimbeau**
**20, rue de Chazelles**
**75847 Paris Cedex 17 (FR)**

(56) References cited:
**US-A1- 2012 016 583**  **US-B2- 7 584 051**
**US-B2- 8 463 543**  **US-B2- 8 798 918**

• **JOHANNES KOPF ET AL: "Automatic generation of destination maps", ACM TRANSACTIONS ON GRAPHICS, ACM, 2 PENN PLAZA, SUITE 701NEW YORKNY10121-0701USA, vol. 29, no. 6, 15 December 2010 (2010-12-15), pages 1 - 12, XP058167623, ISSN: 0730-0301, DOI: 10.1145/ 1882261.1866184**

## Description

GENERAL TECHNICAL FIELD OF THE INVENTION

The field of this invention is that of digital map generation. More particularly, the invention concerns a method to generate access maps for a given destination using Points of Interest (Pol) to facilitate orientation and wayfinding (e.g., by disambiguating complex crossings) without the need of specifying a starting location.

STATE OF THE ART

"Points of Interest" or "Pols", also called landmarks, are elements that aid orientation and wayfinding: it is usual to use landmarks to provide path guiding instructions and to indicate them in access maps. Pols help people on the move constructing a mental representation of an unfamiliar environment in advance and prepare them cognitively to get through difficult or uncertain parts of that environment. Furthermore, for people knowing already a city, recognizing Pols on a map will help to localize the destination. It is therefore critical to properly select and integrate appropriate landmarks in navigational supports.

Given the prominent role Pols have in human communication, an important area of research has recently developed in the domain of automated navigation assistance that aims at programmatically exploiting landmarks to "humanize" navigation support. Examples of such solutions are presented in US Patent Application Publication No. US2015/0112593 and in: Kai-Florian Richter, Stephan Winter. Landmarks: Giscience for Intelligent Services. Springer Publishing Company, Incorporated. 2014.

Navigation support to a destination may be provided by:

- providing a given user, coming from one specific location, with information about how to reach the destination;
- or, in a more generic way, by providing anyone within a region with an access map containing information about how to reach the destination. This typically would be the case for an owner of Pol attraction, wishing to generally advert said Pol.

Studies from the literature have confirmed the intuition that navigation support should be provided at different scales, starting from a high level (*i.e.,* with little precision) to provide an overview on the situation of the destination, and successively moving to more detailed levels to become practical and operational. Examples of such studies are disclosed in: Martin Tomko, Stephan Winter. "Pragmatic construction of destination descriptions for urban environments." Spatial Cognition & Computation,2009, as well as in: Falko Schmid, Kai-Florian Richter, Denise Peters. "Route aware maps: Multigranular wayfinding assistance." Spatial Cognition & Computation, 2010.

Different levels of details are therefore needed within an access map.

More details are typically needed around the destination whereas less details are required for long homogeneous segments (e.g. a long distance on a highway). While using and integrating different levels of precision is a common human practice, it is difficult to do it programmatically: access maps are generally generated from geographic maps which display a region at a single homogeneous scale. Depending on their scale, geographic maps will include selected corresponding structural elements like roads, green areas and major buildings like stadiums and churches. With increasing scale, they include more and more details and commercial Pols like restaurants or shops.

In general, it should be noted that selecting the optimal set of elements to be included in a map in order to help the user grasp the location of the destination is difficult: on the one hand, too many elements may be selected, which create clutter on the map, distracting the user from the relevant elements; on the other hand, relevant elements may not be part of the automatic selection and thus may be missing, not being included in the map.

Thus, recent efforts have gone towards the so-called humanization of navigation tools.

A typical example of such a study is for example disclosed in Kopf, Johannes, et al. "Automatic generation of destination maps. " ACM Transactions on Graphics (TOG). Vol. 29. No. 6. ACM, 2010, in which the authors propose to create a unique access map for a destination that integrates different levels of scale: their method automatically selects a set of relevant roads to access a destination, even if these roads would naturally belong to different scales (e.g. local road, national roads and highways). The method presented first selects these roads and then rearranges the selected roads sub network graphically such that it can be arranged into a single access map. However, this method is restricted to the road network. The resulting map does not include any elements beyond (drivable) roads. In particular, it does not include any landmarks to support directions, *i.e.* to help users decide where and when to keep or change directions in order to reach the destination.

There also exist approaches that attempt to add or highlight Pols that are relevant for following a route on a map. However, these approaches presume one specific origin, destination and route between the origin and the destination. One approach that considers different levels of scale is described in: Falko Schmid, Kai-Florian Richter, Denise Peters.

"Route aware maps: Multigranular wayfinding assistance. " Spatial Cognition & Computation, 2010, *already mentioned*.

This approach begins by adding to the map some details around the origin and the destination location; then it determines a route from the origin to the destination and adds it to the map. It then analyses this route and its environment in order to augment the map with relevant wayfinding information depending on the route's characteristics: it identifies problematic parts like difficult or ambiguous intersections or monotone environments where the user needs additional wayfinding support; it then identifies, selects and adds Pols at each of these locations. Finally, to prevent any problem to reach the destination, it adds:

- Alternative routes from the most critical, e.g. error-prone decision points to the destination; and
- Higher-level information about the remaining space / environment on the map in terms of surrounding districts.

This way, starting from an origin, a destination and a particular route, the approach successively creates a multi-granular map providing more or less detailed information for each location on the map according to how crucial the location is for reaching the destination from the origin. The core of this approach is to try to identify, through an a priori analysis of the route geography, problematic locations needing additional detail, and to add Pols to provide support at these locations.

A similar approach is known from US 8,463,543, in which a map to a destination is created, which contains more detailed information in the vicinity of the destination and which also includes relevant Points of Interest to assist in navigation.

An alternative to such an *a priori* approach could be an *a posteriori* analysis of problems observed, such as dynamically tracking users while they are moving and actually following a given route and to detect the errors they make. Such an error analysis has already been proposed (see e.g., US Patent No 9,127,955) with the aim of adapting on-board navigation instructions in their frequency, details, timing and location. However, it usually does not consider adding Pols, neither does the method described target access map generation.

To improve an access map with a set of Pols, once the critical locations are identified the optimal set of Pols that best disambiguate these locations must be selected and added to the map. To this aim, many parameters may be used, like the Pol typicality, unicity, durability, visibility, or relevance with respect to the particular transportation mode or user. Some approaches try to identify these Pols based on detailed information about each instance (e.g. visuals); others try to compute for each candidate Pol close to the location a suitability based on its position with respect to the decision point and its configuration and to the Pol category. Typical examples are described in: Matt Duckham, Stephan Winter, Michelle Robinson. "Including landmarks in routing instructions. " Journal of Location Based Services 2010 and in: Richter, Kai-Florian. "A uniform handling of different landmark types in route directions." International Conference on Spatial Information Theory. Springer, Berlin, Heidelberg, 2007*.

Despite these various approaches, none combine route simplification and relevant Pol selection based on, proximity to the destination and automatic recognition of decision points and their complexity.

## SUMMARY OF THE INVENTION

One general aim of the invention is to provide a method to generate an access map to a destination.

The access map can be used by anyone, with no need of any indication on the origin where the user starts and with a large range of possible distances to the destination.

The method proposed addresses all or parts of the drawbacks of the approaches proposed in the prior art.

It allows both route simplification and the use of relevant Pols selected.

It facilitates orientation for the user and disambiguates complex crossings.

The invention is defined in the appended claims.

## BRIEF DESCRIPTION OF THE DRAWINGS

The above and other objects, features and advantages of this invention will be apparent in the following detailed description of an illustrative embodiment thereof, which is to be read in connection with the accompanying drawings wherein:

- Figure 1 illustrates an example of architecture in which the method according to the invention is performed;

- Figure 2 represents a general method used to generate access maps according to an embodiment;

- Figure 3 illustrates an example of access map generated by the method;

- Figure 4 represents a method used to select access points inside the focus zone;

- Figure 5 represents a method used to evaluate the PoIs;

- Figure 6 represents a method used to select the best PoIs.

DETAILED DESCRIPTION

The access map generation method presented hereunder provides the user with an access map to reach a given destination point. Said access map allows a zoom effect on a focus zone around the destination point. With said zoom effect, the user is provided with enough information to help his guidance in said focus zone (i.e., an area around a travel destination, e.g. for the last mile or miles of pedestrian, bike, or car navigation), while at the same time keeping the context across the full map.

*Architecture and general context*

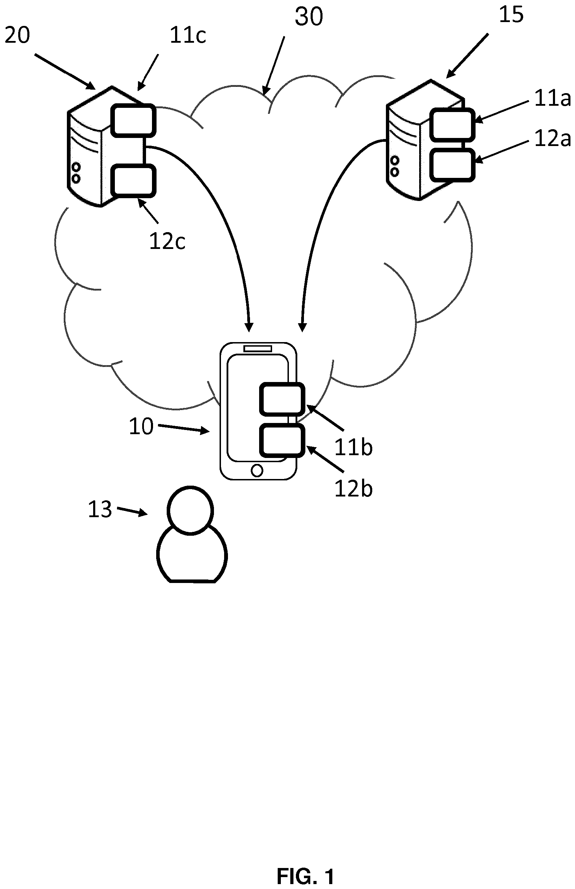

This method may be implemented within a system architecture such as that illustrated in Figure 1, which comprises two servers 15 and 20 and a user device 10. Said servers 15, 20 and said device 10 communicate over a network 30 (which may be wireless and/or wired) such as the Internet for data exchange. Each server 15 and 20 and the user device 10 include a data processor (11a, 11c, and 11b, respectively) and memory (12a, 12c, and 12b, respectively) such as a hard disk.

Server 15 is a map server, which can be for example an external service accessible by an application programming interface (API) such as Open Street Map.

Server 20 is a processing server, using data received from the map server 15 over the communication network 30 to compute an access map.

User device 10 may be any device that communicates with the server 20, including a desktop computer, a laptop computer, a cell phone, a navigation system (e.g., that may be installed in a car or on a bike), a digital watch or other user wearable device. It is used by a user (user 13 on figure 1) to request the generation of a given access map as well as to possibly store it and administer its diffusion to final end users which are to use the map to reach a destination point.

User 13 can be an individual wishing to generate an access map for the guidance up to a given destination point. The user can work an entity, such as a store, a company, a museum, etc. which needs to provide access maps to end users (e.g., clients or visitors).

In one embodiment, the access map generation method presented hereunder operates on server 20, and/or on user device 10. Alternatively, the access map generation may operate on user device 10.

In another embodiment, it is noted that the two servers 15 and 20 may be merged. In yet another embodiment, the functionality of the two servers 15 and 20 may be merged into a standalone user device 10.

The access map is generic for all users. That is, it can be used by any user, independent of a user's starting location and independent of a user's travel distance (i.e., from a user's starting location to the user's final destination).

*Main steps of the access map generation*

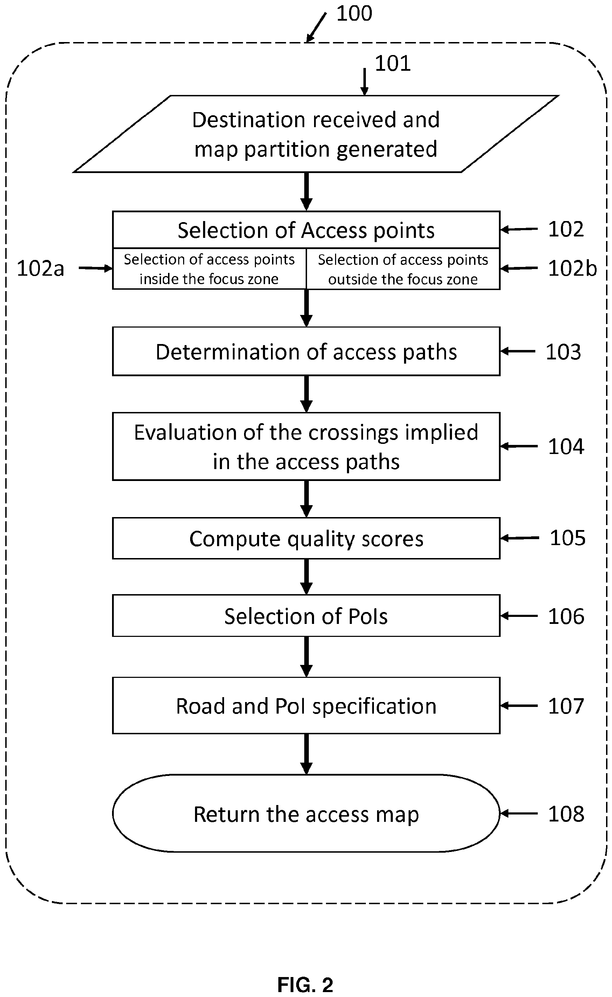

A method 100 is outlined in Figure 2 to generate access maps, which in one embodiment is performed by server 20.

In what follows and in all the present text:

- a road is to be understood as a passage way allowing pedestrians and/or vehicles on which users travel without or with a transportation aid (such as using cars, motorcycles, bicycles, boats, rollerblades, skis, etc.) to travel between places or PoIs; roads include streets, car roads, pedestrian paths, ski runs, cycle paths, waterways, combinations thereof;
- a crossing is to be understood where at least two roads pass through (e.g., that intersect or pass near - over, under, next to, etc.);
- a complexity score of a crossing is to be understood as a score evaluating the complexity of said crossing, in particular depending on the number of roads of the crossing, the geometry defined by said roads, etc.;
- a quality score of a PoI is to be understood as a score evaluating the relevancy of said PoI to facilitate orientation or wayfinding. Such a quality score may depend on the access path considered and on the way a crossing with direct proximity to the PoI is passed through with said access path. For example, if a crossing is traversed in more than one access path, the quality score of the PoI might be higher for an access path where the PoI is located on the outbound road than for an access path where the PoI is not located on the outbound road.

*1) Generation of the map and partition* (step 101)

At step 101, the destination is received and the map around the destination is retrieved.
A destination point is provided to server 20 by user 13.
The request is formulated through device 10. When receiving a request, server 20 obtains from server 15 a map comprising the destination point, as well as map data.
Said map is then partitioned by server 20 to divide it into two areas:

- a focus zone and
- the rest of the map, outside said focus zone.

The focus zone is determined as an area of a given radius around the destination.
Typically, for an access map for an urban district, the focus zone would correspond to a "walking distance" around the destination (e.g. of a few hundred meters to a few kilometers around said destination). Alternate access maps, may cover locations of interest such as a national park, a historical village, an amusement park, a ski resort, and bike trails. The radius of a focus zone may thus vary depending on the activity and the anticipated mode of transportation a user may experience within a focus zone.
The method hereunder described allows to take account higher level of details in the focus zone.
For the rest of the map, outside of the focus zone, a smaller level of details is needed since the end user would be not be walking, but would be traveling through public transportation, or by car or bike for example.

*2) Selection of access points* (step 102)

In the present text, access points are facilities that allow a change of transportation mode, which may be considered waypoints, and which are used for guiding users (e.g., visitors).
For these applications, users travel with various transportation means (e.g., bus, tram, subway, car, bike, pedestrian, plane, waterbus, ferry etc.) and through the corresponding access points (e.g., bus stops, tram stops, subway stops, airports, car parking lots, bike parking lots, ferry landings, etc.).
In these applications, a change of mode of transport can for example be a change from one transportation mode, whether public (subway, train, tram, bus, plane, ferry, etc.), semi-private (e.g., taxi, carpool, etc.), or private (e.g., car, bike, pedestrian, etc.), to another transportation mode.
Applications other than urban district guidance can also be contemplated, such as the generation of access maps in the countryside. In such a case, an access point can be a noticeable place that the end-user can reach, for example by car. The access map provides to the end-user preferred paths to reach the destination points from such access points.
The selection of the access points is performed by server 20 and involves:

- A selection of access points within a focus zone (step 102a), and
- A selection of access points outside of the focus zone (step 102b).

*3) Determination of access paths* (step 103) - Once the access points are selected, servers 20 determines the access paths which allow a user to reach the destination point starting from those selected access points;
*4) Evaluation of the crossings implied in the access paths* (step 104) - once the access paths are determined, server 20 determines on the map the crossings which said paths traverse, and computes evaluation parameters (such as their probability to be crossed and /or a complexity score); these parameters will be further used to select Pols within the area surrounding said crossings;
*5) Computation of quality scores* (step 105) - Server 20 selects Pols which are within the area surrounding crossings within the focus zone and computes quality scores for those Pols.
*6) Selection of Pols* (step 106) - Based on the previous evaluation of crossings and on the quality scores computed for the Pols, server 20 selects the most relevant (e.g., most useful for wayfinding) Pols for the access map;
*7) Road and Pol specification* (step 107), based on the original map, roads are added, removed and/or highlighted from it according to their relevance to reach the destination, and the selected Pols are drawn on the map;
*8) Returning the access map* (step 108) - The generated access map is then returned by server 20 to user device 10 to store it and administer its diffusion to final end users, by for example displaying it on a user interface, either on its own or by augmenting additional information (e.g., ads, hyperlinks to additional information for Pols and crossings, etc.).

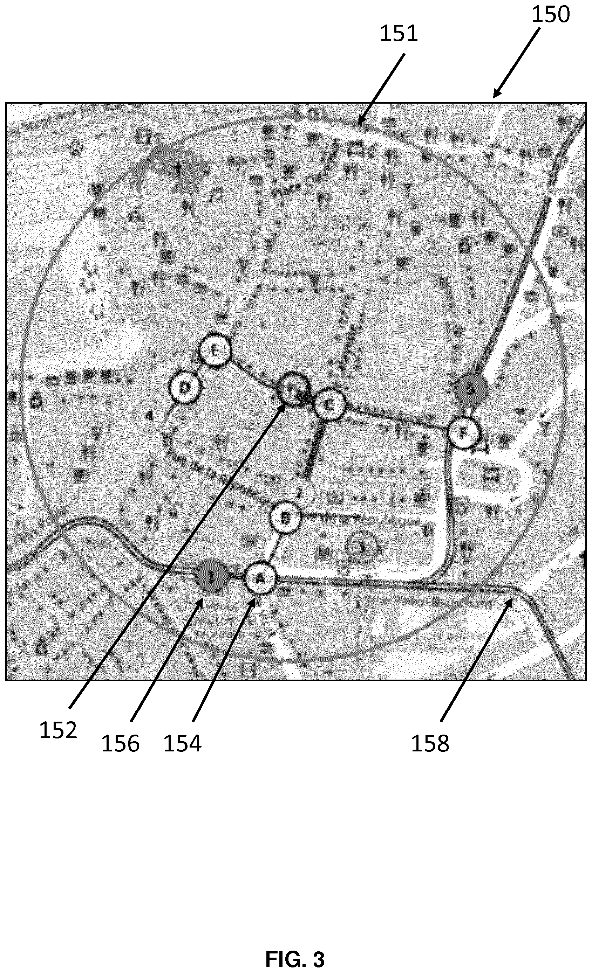

An example of an access map generated using the method outlined in Figure 2 is illustrated in **Figure 3.** The access map 150 includes the focus zone 151, the destination 152, crossings denoted by letters A to F (e.g., crossing 154), the selected Pols denoted by numbers from 1 to 5 (e.g., Pol 156), and wherein the access paths are highlighted by black lines (e.g., access path 158).

Steps 102 to 107 are hereunder further detailed in the case of an urban district access map.

*Selection of access points (step102)*

A list of access points is retrieved by server 20 within the map data received from server 15.

Two different processes are performed by server 20 to determine the access points to be kept for the map for the focus zone and for the rest of the map.

*Selection of access points in the focus zone (step 102a)*

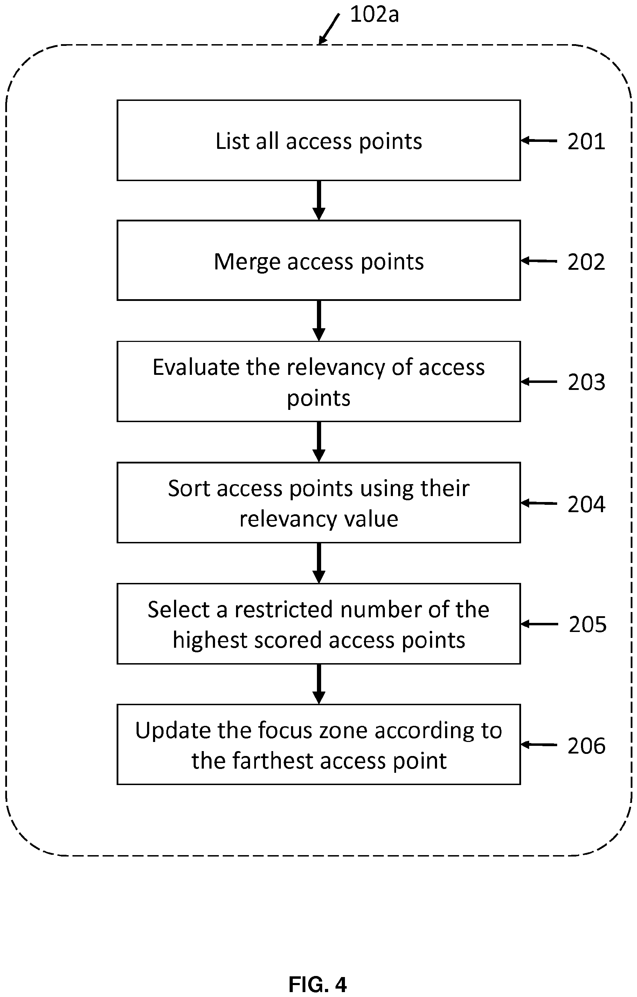

One method performed by server 20 for determining the access points 102a to be selected for the focus zone shown in Figure 2 is set out in detail in **Figure 4:**

1) Listing, in step 201, all existing access points and selecting among those access points those corresponding to transportation access points in the focus zone; in this step server 20 also retrieves from the map data the various public transportation lines for which those access points are stops.

2) Merging, in step 202, related access points of the same type or different types of transportation (e.g., tram, bus, subway).

Types of access points are defined by the public transportation lines to which they belong.

For example, in merging related access points of the same type, such as two bus stops on the same road, one for each direction, are merged if they would appear close to each other on the visual map; and in merging related access points of different types of transportation, such as a bus stop and a tram stop in the same area, where a connection may be readily made between these two types of transportation, are merged to indicate a connection on the visual map (e.g., similar to a transportation hub).

To this aim, the distance between two or more access points detected by server 20 as belonging to the same type or different types of transportation and located on the same road, crossing or area is compared to a threshold distance. The two access points are merged if this distance is less than said threshold.

The threshold distance can for example depend on the actual zoom level of the map.

3) Evaluating, in step 203, relevancy of access points by computing a quality score for each access point that is a function of the following parameters that may be based on user preferences or learned from user behavior (e.g., using location information, transportation methods, etc.):

- The access point's type in order to reflect the relative importance of the different transportation types. In one embodiment, a higher weight is for example given to subways stops; tram stops and then car parking, bike parking zones, and bus stops are given a less important weight;
- The access point's distance to destination: the farther it is, the lower the score is;
- For public transportation, the number of lines traveling through the access point, like tram, bus, subway lines... The more lines go through it, the greater the score is;
- The capacity of the access point. For example, a parking lot capacity, or bike parking capacity; the higher the capacity is, the greater the score is; the following formula can be used, for example, to calculate the relevancy score:

$$relevancy = \frac{1}{distance} \times characteristic \times type$$

Where:

- *characteristic* is an arbitrary integer value given to some features of the access point, representing user's preferences, for example a train station where only one train line is present could be given the value 1 whereas one where two train line are present could be given the value 2;
- *type* is an arbitrary integer value given to the type of access point, representing user's preferences, for example a train station could be given a higher value (4) than a parking (3);

In alternate embodiments, the formula for calculating a relevancy score includes the number of transportation lines and/or the capacity of the lines.

4) Sorting, in step 204, the access points according to their quality score, highest to lowest;

5) In step 205, selecting at least one access point per relevant type. It will here be noted that when there are many different transportation types available, it may also be the case that some are considered irrelevant (e.g. because a transportation type is not frequently used compared to the other transportation types). For such irrelevant transportation types, no corresponding hub will be selected.

For each type of access point, the selected access point is that with the highest score. Other access points of the same type can be added depending on their score, until a maximum number of selected access points is reached. The maximum number of selected access points can be different from one type to the other and can for example be limited for less relevant types of transportation (car parking for example);

6) In step 206, adjusting, the focus zone to be displayed to the end-users to correspond with the farthest selected access point, with a margin of 40% for example.

*Selection of access points outside of the focus zone step (steps 102b)*

Additional access points may be selected by the server 20 outside the focus zone (step 102b). Indeed, users traveling long distances to a destination often go through principal access points that are farther away, like railway stations or airports.

The access map may need to integrate support for users traveling from farther away and through these principal transportation access points to reach and enter the focus zone, the last mile(s) near the destination. In order to select these access points, the method can simply find the closest train stations, airport and highways. However, contrary to access points in the focus zone, these access points are selected mainly just to be represented on the access map but are not used for the determination of access paths, except if they are in the focus zone.

*Determination of access paths (step 103)*

Returning to Figure 2, during step 103 all access paths from access points to the destination in the focus zone are calculated.

This can be done through a classical trip planning algorithm, such as Open Source Routing Machine (OSRM) for Open Street Map, implemented on server 20.

When said trip planning algorithm is able to compute more than one access paths from an access point to the destination, and said more than one access paths have equal lengths within a margin, either in terms of distance or in terms of travel time, these multiple access paths can be used all together in the subsequent steps.

These generated access paths serve two purposes:

- determine the road crossings a user may pass through (e.g., to intersect or pass near) in the focus zone;
- highlight said access paths on the generated access map.

*Determination of the crossings implied in the access paths (step 104)*

The goal of this method is to give PoI information to support future navigation by adding PoI information to crossings along access paths. Thus, the number of PoIs across the map must be limited to avoid cluttering it. For this purpose, it is necessary to select which crossings must be clarified on the map as a priority. This is done according to the following steps:

- computing the probability that a crossing is passed through;
- evaluating the complexity of the crossing by computing a complexity score.

*Computation of crossing probability*

For each crossing in at least one the access paths, the server 20 computes the probability that said crossing is passed through. Considering each path as equally probable, this probability is computed as the number of paths traveling through said crossing divided by the total number of paths considered:

$$crossing\ probablity = \frac{nb\ path\ going\ through\ crossing}{total\ nb\ of\ path}$$

It is also possible to weight these probabilities according to the type of access point from which the access path originates. For instance, end users might come more often by tram and car, and less by bus or bike. Thus, a predefined weight can be assigned to a specific type of access point.

*Computation of crossing complexity*

Every crossing has a level of difficulty linked on one hand to its physical configuration and on the other hand to the traversal of the crossing in terms of inbound and outbound roads. To compute a crossing's complexity score, the server 20 relies on the following parameters:

- The number of inbound/outbound roads at the crossing: there is less complexity to understand a crossing involving 3 roads, than one involving 6 roads. This number is normalized by the maximum number of roads observed on all considered crossings in the access map.
- The need to change direction in the crossing: It is much simpler and does not require much additional information to go straight through a crossing than when a change in direction is required. A corresponding road change indicator is thus set to 0 when the direction to follow from the inbound road into the outbound road is straight; it is set to 1 when a turn is required.
- The existence of confusing roads: if around the outbound road some other roads leave the crossing in a close angle, less than 30 degrees for example, there is a risk of confusion with the direction to take. Therefore, the existence of such confusing roads increases the complexity of a crossing. A corresponding confusing road indicator is set to 1 when confusing roads exist and to 0 otherwise.

Using these parameters, the server 20 computes a crossing complexity for each crossing in at least one access paths as follow:

$$complexity = normalized\ nb_{streets}$$
$$\times\ (\ 1 + directionChangeIndicator + confusingStreetIndicator)$$

In the case of public transportation access points, since there is no incoming road, an automatic direction change is considered, so the associated indicator is set to 1. The other parameters are still consistent.

*Selection of PoIs (step 105 & 106)*

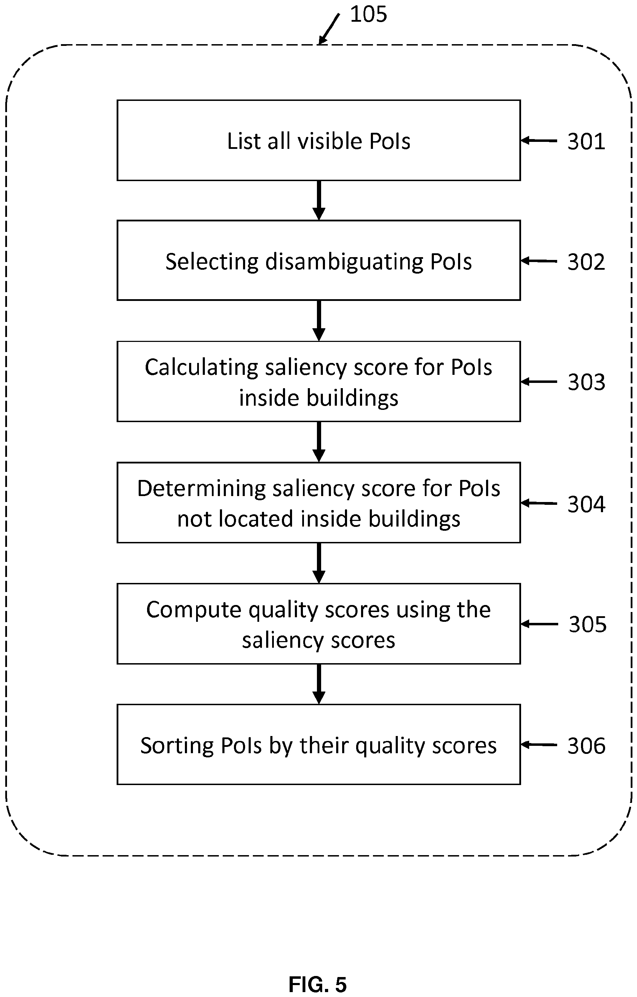

In order to select the most relevant PoIs to disambiguate crossing, all the PoIs are given a quality score as illustrated in **Figure 5** in step 105 by server 20 according to the following procedure for each crossing with a non-zero probability:

1) Listing, in step 301, all PoIs in a close visibility or selection range near a crossing, a close visibility range can be considered to be of 20 meters for example;
2) Selecting, in step 302, the PoIs, for each road segment, that may help to disambiguate a road with respect to a nearby crossing. This step comprises:

- computing a bounding box with a length corresponding to an enlarged visibility range and a width including a marginal width on each side of the road.

- Keeping PoIs that are at least partially included in a visibility bounding box.

This is to select only PoIs or buildings with facades that will be visible from the crossing when looking into the road;
3) Calculating, in step 303, a saliency score for all remaining PoIs located in buildings representing the visual saliency of the PoI, said saliency score depending on:

a. The facade length of the building, where the facade is the side of the building facing the road and that is almost parallel to the road (up to a maximum angle) and closer that a maximum distance with respect to the road. If the building contains multiple PoIs, the facade length is divided by the number of PoIs. If the facade continues outside the bounding box, only the part of the facade that is within the bounding box is considered;
b. The closest facade distance to the intersection;
c. The height of the building;

d. The visibility score of the PoI, depending on its category similar to what is proposed in [8]. Indeed, some categories of PoIs are in general more visible than others. For example, supermarkets and shops can be considered as more visible than a public library for instance. Thus, the visibility score is set a priori accordingly to this expectation:

- Supermarket = 50%,
- Shop/Restaurant = 40%,
- Public library = 10%

For example,

$$saliency\ score = \frac{visibility \times façade\ length \times height}{distance}$$

4) Determining, in step 304, a saliency score for all PoIs that are not located in buildings and belong to a category that is considered as worthwhile for providing directions, in particular in locations where no other PoIs are present, depending on:

e. Their distance to the intersection
f. The visibility score of the PoI, depending on its category, such as:

- Fountain = 100%,
- Bus/Tram stop = 75%,
- Street advertisement = 50%,
- Recycle bin = 25%

Thus,

$$saliency\ score = \frac{visibility}{distance}$$

5) Computing the quality score, in step 305, as the product of the saliency score of each PoI and a given weight according to the road segment nature. If the road segment is the entrance to the traversal, then the weight applied to the saliency score may be 40% for example, if it is the exit of the traversal, then the weight may be about 60%, and 0% for other road segments.
6) Sorting, in step 306, PoIs per quality score for each crossing road side, from greater to lower.

From the list of PoIs obtained the desired number of PoIs can then be selected. This number is a parameter set by default or by the user. Since the main goal is to clarify the access map, it can also depend of the size of the focus zone area, as a density parameter. Since a crossing may have multiple complexity scores and associated PoIs with different quality scores according to traversal configuration (in/out path), the method considers crossing & traversal association where the probability to go through a transversal is the crossing probability divided by the number of transversals.

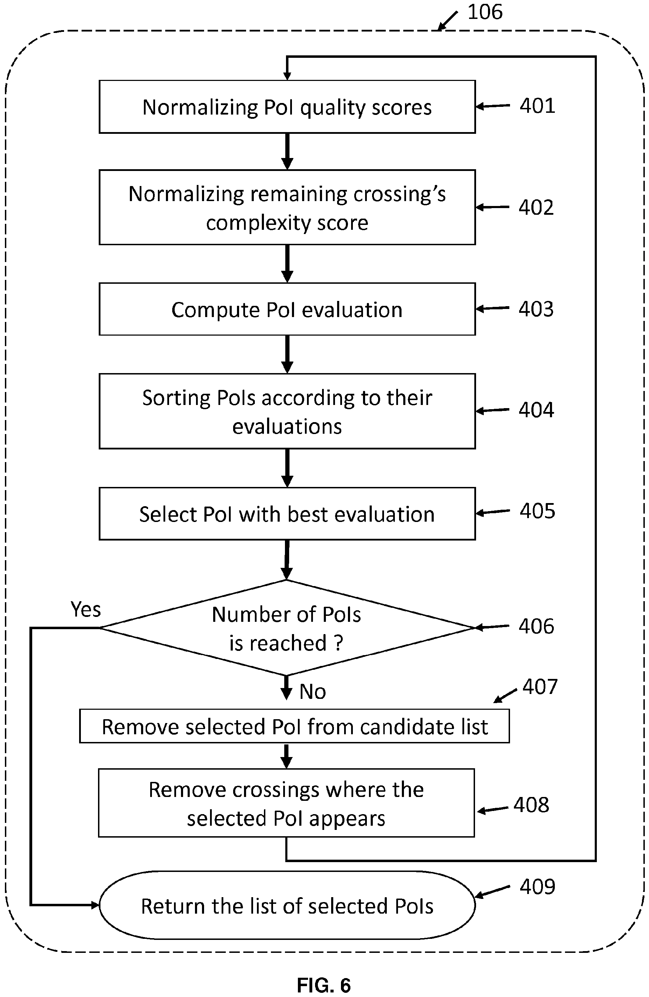

The selection of PoIs is done in step 106 by iterating over the following steps as illustrated in Figure 6, where the list of remaining crossing is initially the list of all crossings passed through in at least one access path, and the candidate list is the list of PoIs:

1) Normalizing, in step 401, PoI quality scores across the map independently of crossings;
2) Normalizing, in step 402, remaining crossing's complexity score;
3) Computing, in step 403, a PoI evaluation for each PoI, as the product of its normalized quality score with the crossing probability and the normalized crossing complexity, and summing this product for each crossing where the same PoI appears;
4) Sorting, in step 404, PoIs according to the evaluation;
5) Select, in step 405, the PoI with the best evaluation;
6) If the number of selected PoI is reached (test 406), then exiting the procedure and returning, in step 409, the list of PoIs selected;
7) Removing, in step 407, the PoI selected at step 405 from the candidate list;
8) Removing, in step 408, all crossings where the selected PoI appears from the remaining crossings list, independently of the traversal.

These steps are repeated until the desired number of selected PoI is reached at test 406.

This procedure limits the number of PoIs per crossing to one; it is also possible to adjust this choice to multiple PoIs per crossing. In this case, it is possible to maintain a crossing in the candidate list if the number of PoI for this crossing is not reached and possibly reduce the crossing complexity.

Additionally, some *exceptional PoIs* can be added to the access map, these are particular PoIs well known at the scale of the considered region and that are particularly visible. Such an exceptional PoI can be for example the Eiffel Tower in the city of Paris. When one of these PoIs is present in a particular region it is always included in the map, whether it belongs to an access path or not, as it allows the user to orient himself.

*Road simplification and highlighting (step 107)*

In this step the server 20 combines the access points, the access paths, and the selected PoIs to display them on generated access map.

- First, all the selected PoIs are represented on the generated access map:

  • The destination building is represented by a building shape with the destination icon with a specific color;
  • For building PoIs inside the focus zone: each PoI is represented by the building shape with an icon corresponding to the type of the PoI;
  • For non-building PoI inside the focus zone: each PoI is represented by an icon corresponding to the type of the PoI;
  • For exceptional, and long or huge infrastructure PoIs outside the focus zone: as icon or shape with description;
  • For road directions: as directional labels on the visual map boundary;

- Transportation access points are represented by icon corresponding to the transportation mode. Main access points, outside the focus zone, have bigger icons than the ones in the focus zone;
- Roads, parks and squares are displayed by default in grey and in the same tiny size except in the following cases:

  • In the focus zone roads are colored according to their type. Important roads, such as boulevard, have flashy colors, while secondary and third ones have more and more dull colors;
  • In the focus zone, roads that are part of trips between access points and destination have also different sizes according to their type;
  • Roads are colored and at right size in the visual map as well when they represent the trip between a direction and the closest associated access point;

- Tram and subway lines are drawn at specific size and color:

  • Inside the focus zone when they go through the selected transportation access points;
  • Outside the focus zone when the line links the main transportation access point outside the focus zone to the access point inside the focus zone;
  • Other lines have the same size but they are black with a fading out effect from colored to black when the line goes out of the focus zone and beyond the main transportation access point in the visible map;
  • On the boundary of the focus zone, at the intersection with lines, our map displayed public transportation line label.

**Claims**

1. A method, using a data processor, to generate an access map for reaching, independent of origin, a travel destination (152), said method comprising the following steps:

   a) Selecting (102), within a focus zone (151) identifying an area around the travel destination, a set of access points, where access points are facilities that allow a change of transportation mode;
   b) Computing (103) access paths (158) to the travel destination (152) from one or more access points in the set of selected access points;
   c) Listing crossings (154) that at least one of the computed access paths pass through;
   d) For each listed crossing:

      i/ evaluating (104) the probability that the listed crossing is passed through by an access path and calculating at least one complexity score evaluating a complexity of the listed crossing;

ii/ determining (105) a set of Points of Interest, PoIs (156), along the roads passing through the listed crossing and calculating a quality score for each PoI in the set of PoIs, the quality score of a PoI in the set of PoIs evaluating a relevancy of the PoI to facilitate orientation;

iii/ selecting the most relevant (106) PoIs from the set of PoIs based on their quality scores;

e) Generating (107) the access map including the access paths and the selected PoIs;

f) Outputting (108) the generated access map.

2. A method according to claim 1, wherein the selecting of step a) comprises the following sub-steps:

i) Listing existing access points which are in the focus zone around the destination,

ii) For each access point in said given focus zone, computing a quality score characterizing its relevancy for the user as a function of parameters associated with said access point, said parameters comprising:

the access point's type;

the access point's distance to the destination;

the access point's capacity;

the access point's number of lines traveling through it,

iii) Selecting the best access points according to their quality scores.

3. A method according to claim 2, wherein the computation of the quality scores is a function of at least the following parameters:

- the type of transportation through which the access point can be reached,
- the distance to the destination, and
- if the access point is a public transportation access point, the number of transportation lines through which it can be reached or, if the access point is a parking facility, its capacity.

4. A method according to claim 2, wherein the access points are categorized according to the type of transportation through which the access point can be reached, and wherein at least one access point is selected in sub-step ii) of step a), for each type of transportation considered as relevant.

5. A method according to any one of the preceding claims wherein the probability that a given crossing is passed through by at least one access path is calculated as the ratio of the number of access paths traveling through the crossing and the total number of access paths in the focus zone.

6. A method according to any one of the preceding claims wherein for a given access path, a complexity score of a crossing is calculated as a function of at least the following parameters:

- The number roads at the crossing;
- The need to change direction in the crossing.

7. A method according to any one of the preceding claims wherein for a given access path, a complexity score of a crossing is calculated as a function of at least the following parameter

- The presence of at least a confusing road, which is a road near the outbound road of the access path forming an angle smaller than a given threshold with the outbound road of the access path.

8. A method according to any one of the preceding claims wherein at least one PoI in the set of PoIs along the roads passing through the listed crossing is a building or is hosted in a building, said building being at the proximity of the listed crossing and wherein the quality score of said at least one PoI is a function of a saliency score based on the characteristics of said building.

9. A method according to claim 8 wherein the saliency score of a PoI which is a building or which is hosted in a building, is a function of the following parameters:

- the length of the facade of the building on the map;
- the distance of the closest point of the facade to the crossing;
- the height of the building.

10. A method according to any one of claims 8 to 9 wherein PoIs are categorized in different types, wherein saliency scores are assigned to said types of PoIs and wherein the quality score of a given point of interest (PoI) belonging to one of said types is a function of the saliency score assigned to at least one type of PoI.

11. A method according to anyone of the preceding claims wherein a predetermined list of exceptional PoIs is provided and the representation of said PoIs is added to the map.

12. A method according to any one of claims 8 to 10 wherein the selection of PoIs for a given crossing is performed through the following sub-steps:

   - Listing all PoIs within a given distance from the crossing;
   - Computing a bounding box around the outbound road of the access path, said bounding box having a given length corresponding to a visibility range from the crossing and a given width so as to include the buildings on each side of the road,
   - Selecting the PoIs within said bounding box;
   - Computing a quality score being the saliency score of the PoIs multiplied by a weight;
   - Selecting the PoIs according to their quality score.

13. A method according to claim 12, wherein the weight applied to the saliency score of a PoI to compute the quality score of said PoI depends on whether the PoI is located in the inbound road, the outbound road or another road of the crossing, said weight is used to promote PoIs located in the outbound road of the access path and penalize PoIs not belonging to the access path.

14. A method according to any one of the preceding claims wherein the selection of the PoIs to display on the map, is done by iterating through the following steps until the number of PoI reaches the specification of the user, starting with a list of crossings containing all the crossings passed through in at least one access path:

   1/ Normalizing the PoIs quality scores across the map;
   2/ Normalizing the complexity score of the crossings in the list across the map;
   3/ for each crossing where a PoI appears, summing the product of the crossing probability, the normalized crossing complexity and the normalized quality score of the PoIs;
   4/ Selecting the PoI with the highest sum in order to display it on the map;
   5/ Remove the crossing associated with the selected PoI from the list of crossings;
   6/ Going back to step 1/.

15. A method according to any one of the preceding claims wherein the generation of an access map including the access paths and PoIs comprises the following steps:

   - Representing the destination on the map;
   - Representing the selected PoI on the map and adding information about the nature of the PoI;
   - Representing the selected access points on the map;
   - Representing the unused features of the map as background, such as un-passed through roads, non-PoI parks or squares;
   - Highlighting roads passed through in at least one access path;
   - Highlighting transportation lines in the focus zone that go through at least one selected access point;
   - Highlighting transportation lines outside the focus zone when they link a main access point to a selected access point inside the focus zone.

16. A method according to any one of the preceding claims wherein the generated access map can be any kind of map, such as visual map, tactile map, or audio map.

17. Computer program product comprising code instructions to execute a method according to one of claims 1 to 15 for generating an access map.

**18.** A computer-readable medium, on which is stored a computer program product comprising code instructions to execute a method according to one of claims 1 to 15 for generating an access map.

**Patentansprüche**

**1.** Verfahren, das einen Datenprozessor verwendet, um eine Zugangskarte zu generieren, um unabhängig vom Ausgangspunkt ein Reiseziel (152) zu erreichen, wobei das Verfahren die folgenden Schritte umfasst:

a) Auswählen (102), innerhalb einer Schwerpunktzone (151), die einen Bereich um das Reiseziel herum identifiziert, einer Menge von Zugangspunkten, wobei Zugangspunkte Einrichtungen sind, die eine Änderung des Transportmittelmodus ermöglichen;
b) Berechnen (103) von Zugangswegen (158) zum Reiseziel (152) von einem oder mehreren Zugangspunkten in der Menge von ausgewählten Zugangspunkten aus;
c) Aufführen von Kreuzungen (154), die mindestens einer der berechneten Zugangswege durchquert;
d) für jede aufgeführte Kreuzung:

i) Bewerten (104) der Wahrscheinlichkeit, dass die aufgeführte Kreuzung von einem Zugangsweg durchquert wird, und Berechnen mindestens einer Komplexitätszahl, die eine Komplexität der aufgeführten Kreuzung bewertet;
ii) Bestimmen (105) einer Menge von Interessenpunkten, Pols (156), entlang der Straßen, welche die aufgeführte Kreuzung überqueren, und Berechnen einer Qualitätszahl für jeden Pol in der Menge von Pols, wobei die Qualitätszahl eines Pol in der Menge von Pols eine Sachdienlichkeit des Pol zum Erleichtern der Orientierung bewertet;
iii) Auswählen der sachdienlichsten (106) Pols aus der Menge von Pols basierend auf ihren Qualitätszahlen;

e) Generieren (107) der Zugangskarte, welche die Zugangswege und die ausgewählten Pols umfasst;
f) Ausgeben (108) der generierten Zugangskarte.

**2.** Verfahren nach Anspruch 1, wobei das Auswählen aus Schritt a) die folgenden Teilschritte umfasst:

i) Aufführen von existierenden Zugangspunkten, die sich in der Schwerpunktzone um das Ziel herum befinden,
ii) für jeden Zugangspunkt in der gegebenen Schwerpunktzone, Berechnen einer Qualitätszahl, die seine Sachdienlichkeit für den Benutzer als Funktion von Parametern, die dem Zugangspunkt zugeordnet sind, charakterisiert, wobei die Parameter umfassen:

die Art des Zugangspunktes;
den Abstand vom Zugangspunkt zum Ziel;
die Kapazität des Zugangspunktes;
die Anzahl der Linien des Zugangspunktes, die durch diesen hindurchführen,

iii) Auswählen der besten Zugangspunkte gemäß ihren Qualitätszahlen.

**3.** Verfahren nach Anspruch 2, wobei die Berechnung der Qualitätszahlen eine Funktion mindestens der folgenden Parameter ist:

- der Art des Transportmittels, mit dem der Zugangspunkt zu erreichen ist,
- des Abstands zum Ziel, und
- falls der Zugangspunkt ein Zugangspunkt für öffentliche Transportmittel ist, der Anzahl der Transportmittellinien, über die er erreichbar ist, oder falls der Zugangspunkt eine Parkeinrichtung ist, ihrer Kapazität.

**4.** Verfahren nach Anspruch 2, wobei die Zugangspunkte gemäß der Art des Transportmittels, mit dem der Zugangspunkt erreichbar ist, eingestuft werden, und wobei mindestens ein Zugangspunkt in dem Teilschritt ii) von Schritt a) für jede Art von Transportmittel, die als sachdienlich angesehen wird, ausgewählt wird.

**5.** Verfahren nach einem der vorhergehenden Ansprüche, wobei die Wahrscheinlichkeit, dass eine gegebene Kreuzung von mindestens einem Zugangsweg überquert wird, als das Verhältnis der Anzahl von Zugangspunkten, die über die Kreuzung gehen, und der Gesamtanzahl von Zugangswegen in der Schwerpunktzone berechnet wird.

6. Verfahren nach einem der vorhergehenden Ansprüche, wobei für einen gegebenen Zugangsweg eine Komplexitätszahl einer Kreuzung als Funktion mindestens der folgenden Parameter berechnet wird:

- der Anzahl der Straßen an der Kreuzung;
- der Notwendigkeit einer Richtungsänderung an der Kreuzung.

7. Verfahren nach einem der vorhergehenden Ansprüche, wobei für einen gegebenen Zugangsweg eine Komplexitätszahl einer Kreuzung als Funktion mindestens des folgenden Parameters berechnet wird:

- des Vorhandenseins mindestens einer verwirrenden Straße, die eine Straße in der Nähe der abgehenden Straße des Zugangswegs ist, die einen Winkel, der kleiner als eine gegebene Schwelle ist, mit der abgehenden Straße des Zugangswegs bildet.

8. Verfahren nach einem der vorhergehenden Ansprüche, wobei mindestens ein Pol in der Menge von Pols entlang der Straßen, welche die aufgeführte Kreuzung überqueren, ein Gebäude ist oder in einem Gebäude aufgenommen ist, wobei sich das Gebäude in der Nähe der aufgeführten Kreuzung befindet, und wobei die Qualitätszahl des mindestens einen Pol eine Funktion einer Auffälligkeitszahl basierend auf den Kennzeichen des Gebäudes ist.

9. Verfahren nach Anspruch 8, wobei die Auffälligkeitszahl eines Pol, der ein Gebäude ist oder der in einem Gebäude aufgenommen ist, eine Funktion der folgenden Parameter ist:

- der Länge der Fassade des Gebäudes auf der Karte;
- des Abstands des nächsten Punktes der Fassade zur Kreuzung;
- der Höhe des Gebäudes.

10. Verfahren nach einem der Ansprüche 8 bis 9, wobei die Pols nach verschiedenen Arten eingestuft werden, wobei den Arten von Pols Auffälligkeitszahlen zugeteilt werden, und wobei die Qualitätszahl eines gegebenen Interessenpunktes (PoI), der zu einer der Arten gehört, eine Funktion der Auffälligkeitszahl ist, die mindestens einer Art von Pol zugeteilt wird.

11. Verfahren nach einem der vorhergehenden Ansprüche, wobei eine vorbestimmte Liste von außergewöhnlichen Pols bereitgestellt wird und die Darstellung der Pols zu der Karte hinzugefügt wird.

12. Verfahren nach einem der Ansprüche 8 bis 10, wobei die Auswahl von Pols für eine gegebene Kreuzung durch die folgenden Teilschritte ausgeführt wird:

- Aufführen aller Pols innerhalb eines gegebenen Abstands von der Kreuzung;
- Berechnen einen Rahmens um die abgehende Straße des Zugangswegs herum, wobei der Rahmen eine gegebene Länge, die einem Sichtbarkeitsbereich von der Kreuzung aus entspricht, und eine gegebene Breite, um die Gebäude auf jeder Seite der Straße zu umfassen, aufweist,
- Auswählen der Pols innerhalb des Rahmens;
- Berechnen einer Qualitätszahl, welche die Auffälligkeitszahl der Pols multipliziert mit einer Gewichtung ist;
- Auswählen der Pols gemäß ihrer Qualitätszahl.

13. Verfahren nach Anspruch 12, wobei die Gewichtung, die auf die Auffälligkeitszahl eines Pol angewendet wird, um die Qualitätszahl des Pol zu berechnen, davon abhängt, ob sich der Pol in der ankommenden Straße, der abgehenden Straße oder einer anderen Straße der Kreuzung befindet, wobei die Gewichtung verwendet wird, um Pols zu begünstigen, die sich in der abgehenden Straße des Zugangswegs befinden, und Pols zu bestrafen, die nicht zum Zugangsweg gehören.

14. Verfahren nach einem der vorhergehenden Ansprüche, wobei die Auswahl der Pols, die auf der Karte anzuzeigen sind, durch Iterieren durch die folgenden Schritte erfolgt, bis die Anzahl von Pols die Vorgabe des Benutzers erreicht, beginnend mit einer Liste von Kreuzungen, die alle Kreuzungen enthält, die auf mindestens einem Zugangsweg überquert werden:

1) Normalisieren der PoI-Qualitätszahlen über die Karte;
2) Normalisieren der Komplexitätszahl der Kreuzungen in der Liste über die Karte;
3) für jede Kreuzung, an der ein Pol erscheint, Summieren des Produkts der Kreuzungswahrscheinlichkeit, der normalisierten Kreuzungskomplexität und der normalisierten Qualitätszahl der Pols;
4) Auswählen des Pol mit der höchsten Summe, um ihn auf der Karte anzuzeigen;
5) Entfernen der Kreuzung, die dem ausgewählten Pol zugeordnet ist, aus der Liste der Kreuzungen;
6) Zurückkehren zu Schritt 1).

**15.** Verfahren nach einem der vorhergehenden Ansprüche, wobei das Generieren einer Zugangskarte, welche die Zugangswege und Pols umfasst, die folgenden Schritte umfasst:

- Darstellen des Ziels auf der Karte;
- Darstellen des ausgewählten Pol auf der Karte und Hinzufügen von Informationen über die Beschaffenheit des Pol;
- Darstellen der ausgewählten Zugangspunkte auf der Karte;
- Darstellen der nicht verwendeten Merkmale der Karte als Hintergrund, wie etwa nicht durchfahrene Durchgangsstraßen, Parks oder Plätze, die keine Pols sind;
- Hervorheben von Straßen, die auf mindestens einem Zugangsweg überquert werden;
- Hervorheben von Transportmittellinien in der Schwerpunktzone, die durch mindestens einen ausgewählten Zugangspunkt gehen;
- Hervorheben von Transportmittellinien außerhalb der Schwerpunktzone, wenn sie einen Hauptzugangspunkt mit einem ausgewählten Zugangspunkt innerhalb der Schwerpunktzone verbinden.

**16.** Verfahren nach einem der vorhergehenden Ansprüche, wobei die generierte Zugangskarte eine beliebige Art von Karte sein kann, wie etwa eine sichtbare Karte, eine fühlbare Karte oder eine hörbare Karte.

**17.** Computerprogrammprodukt, das Codeanweisungen umfasst, um ein Verfahren nach einem der Ansprüche 1 bis 15 zum Generieren einer Zugangskarte auszuführen.

**18.** Computerlesbarer Datenträger, auf dem ein Computerprogrammprodukt gespeichert ist, das Codeanweisungen umfasst, um ein Verfahren nach einem der Ansprüche 1 bis 15 zum Generieren einer Zugangskarte auszuführen.

**Revendications**

**1.** Méthode, utilisant un processeur de données, pour générer un plan d'accès permettant d'atteindre, indépendamment de l'origine, une destination de voyage (152), ladite méthode comprenant les étapes suivantes :

a) Sélection (102), dans une zone de focalisation (151) identifiant une zone autour de la destination de voyage, d'un ensemble de points d'accès, les points d'accès étant des installations qui permettent de changer de mode de transport ;
b) calculer (103) des chemins d'accès (158) à la destination de voyage (152) à partir d'un ou de plusieurs points d'accès dans l'ensemble des points d'accès sélectionnés ;
c) répertorier les croisements (154) par lesquels passe au moins l'un des chemins d'accès calculés ;
d) Pour chaque croisement répertorié :

i/ évaluer (104) la probabilité que le croisement répertorié soit traversé par un chemin d'accès et calculer au moins un score de complexité évaluant une complexité du croisement répertorié ;
ii/ déterminer (105) un ensemble de points d'intérêt, Pols (156), le long des routes passant par le croisement répertorié et calculer un score de qualité pour chaque point d'intérêt de l'ensemble des points d'intérêt, le score de qualité d'un point d'intérêt de l'ensemble des points d'intérêt évaluant la pertinence du point d'intérêt pour faciliter l'orientation ;
iii/ sélectionner les Pols les plus pertinents (106) parmi l'ensemble des Pols en fonction de leur score de qualité ;

e) Générer (107) la carte d'accès comprenant les chemins d'accès et les Pols sélectionnés ;
f) Produire (108) le plan d'accès généré.

**2.** Méthode selon la revendication 1, dans laquelle la sélection de l'étape a) comprend les sous-étapes suivantes :

i) Lister des points d'accès existants qui se trouvent dans la zone de focalisation autour de la destination,

ii) Pour chaque point d'accès dans ladite zone de focalisation donnée, calculer un score de qualité caractérisant sa pertinence pour l'utilisateur en fonction de paramètres associés audit point d'accès, lesdits paramètres comprenant :

le type de point d'accès ;
la distance entre le point d'accès et la destination ;
la capacité du point d'accès ;
le nombre de lignes traversant le point d'accès,

iii) Sélectionner les meilleurs points d'accès en fonction de leur score de qualité.

3. Méthode selon la revendication 2, dans laquelle le calcul des scores de qualité est fonction d'au moins les paramètres suivants :

- le type de transport par lequel le point d'accès peut être atteint,
- la distance jusqu'à la destination, et
- si le point d'accès est un point d'accès aux transports publics, le nombre de lignes de transport par lesquelles il peut être atteint ou, si le point d'accès est un parking, sa capacité.

4. Méthode selon la revendication 2, dans laquelle les points d'accès sont classés en fonction du type de transport par lequel le point d'accès peut être atteint, et dans laquelle au moins un point d'accès est sélectionné à la sous-étape ii) de l'étape a), pour chaque type de transport considéré comme pertinent.

5. Méthode selon l'une quelconque des revendications précédentes, dans laquelle la probabilité qu'un croisement donné soit traversé par au moins un chemin d'accès est calculée comme le ratio entre le nombre de chemins d'accès passant par le croisement et le nombre total de chemins d'accès dans la zone de focalisation.

6. Méthode selon l'une quelconque des revendications précédentes dans laquelle, pour un chemin d'accès donné, un score de complexité d'un croisement est calculé en fonction d'au moins les paramètres suivants :

- Le nombre de routes au croisement ;
- La nécessité de changer de direction au croisement.

7. Méthode selon l'une quelconque des revendications précédentes dans laquelle, pour un chemin d'accès donné, un score de complexité d'un croisement est calculé en fonction d'au moins le paramètre suivant

- La présence d'au moins une route déroutante, c'est-à-dire une route proche de la route en partance du chemin d'accès formant un angle inférieur à un seuil donné avec la route en partance du chemin d'accès.

8. Méthode selon l'une quelconque des revendications précédentes, dans laquelle au moins un PoI de l'ensemble des PoIs le long des routes passant par le croisement répertorié est un bâtiment ou est hébergé dans un bâtiment, ledit bâtiment se trouvant à proximité du croisement répertorié, et dans laquelle le score de qualité dudit au moins un PoI est fonction d'un score de saillance basé sur les caractéristiques dudit bâtiment.

9. Méthode selon la revendication 8, dans laquelle le score de saillance d'un PoI qui est un bâtiment ou qui est hébergé dans un bâtiment, est fonction des paramètres suivants :

- la longueur de la façade du bâtiment sur la carte ;
- la distance entre le point le plus proche de la façade et le croisement ;
- la hauteur du bâtiment.

10. Méthode selon l'une des revendications 8 à 9, dans laquelle les PoIs sont classés en différents types, dans laquelle des scores de saillance sont attribués à ces types de PoIs et dans laquelle le score de qualité d'un point d'intérêt donné (PoI) appartenant à l'un de ces types est fonction du score de saillance attribué à au moins un type de PoI.

11. Méthode selon l'une quelconque des revendications précédentes, dans lequel une liste prédéterminée de PoIs exceptionnels est fournie et la représentation de ces PoIs est ajoutée à la carte.

12. Méthode selon l'une des revendications 8 à 10, dans lequel la sélection des Pols pour un croisement donné est effectuée au moyen des sous-étapes suivantes :

- Lister tous les Pols à une distance donnée du croisement ;
- Calculer une boîte de délimitation périmètre autour de la route en partance du chemin d'accès, cette boîte de délimitation ayant une longueur donnée correspondant à un champ de visibilité depuis le croisement et une largeur donnée de manière à inclure les bâtiments situés de chaque côté de la route,
- Sélectionner des Pol à l'intérieur de ladite boîte de délimitation ;
- Calculer un score de qualité correspondant au score de saillance des Pols multiplié par un poids ;
- Sélectionner les Pols en fonction de leur score de qualité.

13. Méthode selon la revendication 12, dans lequel le poids appliqué au score de saillance d'un Pol pour calculer le score de qualité dudit Pol dépend du fait que le Pol est situé sur la route entrante, la route en partance ou une autre route du croisement, ledit poids étant utilisé pour favoriser les Pols situés sur la route en partance du chemin d'accès et pénaliser les Pols n'appartenant pas au chemin d'accès.

14. Méthode selon l'une des revendications précédentes, dans lequel la sélection des points d'intérêt à afficher sur la carte s'effectue en itérant les étapes suivantes jusqu'à ce que le nombre de Pol corresponde aux spécifications de l'utilisateur, en commençant par une liste de croisements contenant tous les croisements traversés par au moins un chemin d'accès :

1/ Normalisation les scores de qualité des Pols sur l'ensemble de la carte ;
2/ Normaliser le score de complexité des croisements dans de la liste sur l'ensemble de la carte ;
3/ pour chaque croisement où apparaît un Pol, additionner le produit de la probabilité de croisement, de la complexité normalisée du croisement et de le score de qualité normalisé des Pols ;
4/ Sélectionner le Pol ayant la somme la plus élevée afin de l'afficher sur la carte ;
5/ Supprimer de la liste des croisements le croisement associé au Pol sélectionné ;
6/ Revenir à l'étape 1/.

15. Méthode selon l'une des revendications précédentes, dans lequel la génération d'une carte d'accès comprenant les chemins d'accès et les Pols comprend les étapes suivantes :

- Représentation de la destination sur la carte ;
- Représentation du Pol sélectionné sur la carte et ajout d'informations sur la nature du Pol ;
- Représentation des points d'accès sélectionnés sur la carte ;
- Représentation en arrière-plan des caractéristiques inutilisées de la carte, telles que les routes non traversées, les parcs ou les places sans Pol;
- Mise en évidence des routes traversées par au moins un chemin d'accès ;
- Mise en évidence des lignes de transport dans la zone de focalisation qui passent par au moins un point d'accès sélectionné ;
- Mise en évidence des lignes de transport en dehors de la zone de focalisation lorsqu'elles relient un point d'accès principal à un point d'accès sélectionné à l'intérieur de la zone de focalisation.

16. Méthode selon l'une des revendications précédentes, dans lequel le plan d'accès généré peut être n'importe quel type de plan, tel qu'un plan visuel, un plan tactile ou un plan audio.

17. Produit programme d'ordinateur comprenant des instructions de code pour exécuter une méthode selon l'une des revendications 1 à 15 pour générer une carte d'accès.

18. Support lisible par ordinateur, sur lequel est stocké un produit de programme informatique comprenant des instructions de code pour exécuter une méthode selon l'une des revendications 1 à 15 pour générer une carte d'accès.

**FIG. 1**

100

101

Destination received and
map partition generated

Selection of Access points — 102

| Selection of access points inside the focus zone | Selection of access points outside the focus zone |
|---|---|

102a →

← 102b

Determination of access paths — 103

Evaluation of the crossings implied
in the access paths — 104

Compute quality scores — 105

Selection of PoIs — 106

Road and PoI specification — 107

Return the access map — 108

FIG. 2

**FIG. 3**

102a

```
┌─────────────────────────────────┐
│       List all access points       │ ←— 201
└─────────────────────────────────┘
                  │
                  ▼
┌─────────────────────────────────┐
│        Merge access points         │ ←— 202
└─────────────────────────────────┘
                  │
                  ▼
┌─────────────────────────────────┐
│   Evaluate the relevancy of access │ ←— 203
│              points                │
└─────────────────────────────────┘
                  │
                  ▼
┌─────────────────────────────────┐
│    Sort access points using their  │ ←— 204
│           relevancy value          │
└─────────────────────────────────┘
                  │
                  ▼
┌─────────────────────────────────┐
│  Select a restricted number of the │ ←— 205
│     highest scored access points   │
└─────────────────────────────────┘
                  │
                  ▼
┌─────────────────────────────────┐
│  Update the focus zone according to│ ←— 206
│       the farthest access point    │
└─────────────────────────────────┘
```

**FIG. 4**

105

```
          ┌─────────────────────────────┐
          │     List all visible PoIs     │ ◀── 301
          └─────────────────────────────┘
                         │
                         ▼
          ┌─────────────────────────────┐
          │  Selecting disambiguating PoIs │ ◀── 302
          └─────────────────────────────┘
                         │
                         ▼
          ┌─────────────────────────────┐
          │ Calculating saliency score for PoIs │ ◀── 303
          │        inside buildings       │
          └─────────────────────────────┘
                         │
                         ▼
          ┌─────────────────────────────┐
          │ Determining saliency score for PoIs │ ◀── 304
          │     not located inside buildings │
          └─────────────────────────────┘
                         │
                         ▼
          ┌─────────────────────────────┐
          │  Compute quality scores using the │ ◀── 305
          │         saliency scores       │
          └─────────────────────────────┘
                         │
                         ▼
          ┌─────────────────────────────┐
          │ Sorting PoIs by their quality scores │ ◀── 306
          └─────────────────────────────┘
```

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150112593 A
- US 8463543 B
- US 9127955 B

**Non-patent literature cited in the description**

- **KAI-FLORIAN RICHTER ; STEPHAN WINTER**. Landmarks: Giscience for Intelligent Services. Springer Publishing Company, Incorporated., 2014
- **MARTIN TOMKO ; STEPHAN WINTER**. Pragmatic construction of destination descriptions for urban environments.. *Spatial Cognition & Computation*, 2009
- **FALKO SCHMID ; KAI-FLORIAN RICHTER ; DE-NISE PETERS**. Route aware maps: Multigranular wayfinding assistance. *Spatial Cognition & Computation*, 2010
- Automatic generation of destination maps.. **KOPF, JOHANNES et al.** ACM Transactions on Graphics (TOG).. ACM, 2010, vol. 29
- **FALKO SCHMID ; KAI-FLORIAN RICHTER ; DE-NISE PETERS**. Route aware maps: Multigranular wayfinding assistance. *Spatial Cognition & Computation,*, 2010
- **MATT DUCKHAM ; STEPHAN WINTER ; MI-CHELLE ROBINSON**. Including landmarks in routing instructions.. *Journal of Location Based Services*, 2010
- A uniform handling of different landmark types in route directions. **RICHTER, KAI-FLORIAN**. International Conference on Spatial Information Theory. Springer, 2007